# EUROPEAN PATENT SPECIFICATION

(11) **EP 2 703 609 B1**
(45) Date of publication and mention of the grant of the patent: **28.08.2019**
(21) Application number: 13176702.2
(22) Date of filing: 16.07.2013
(51) Int. Cl.: F01K 13/02, F01K 7/22, F01K 17/02, F22B 37/00

(54) **Steam turbine plant and control method of the same**
Dampfturbinenanlage und Regelverfahren dafür
Installation de turbine à vapeur et son procédé de commande

(30) Priority: 31.07.2012 JP 2012170060
(43) Date of publication of application: 05.03.2014
(73) Proprietor: Kabushiki Kaisha Toshiba, Tokyo 105-8001 (JP)
(72) Inventor: Itou, Shinsuke, Minato-ku, Tokyo 105-8001 (JP); Sanada, Masahiko, Minato-ku, Tokyo 105-8001 (JP); Egami, Norihide, Minato-ku, Tokyo 105-8001 (JP); Suzuki, Kensuke, Minato-ku, Tokyo 105-8001 (JP); Iwasa, Kiyohiko, Minato-ku, Tokyo 105-8001 (JP)
(74) Representative: Moreland, David

(56) References cited:
- EP-A1- 2 497 561
- EP-A2- 2 136 037
- JP-A- 2011 132 899

## Description

### FIELD

The invention described herein relates to a steam turbine plant and to a method of controlling the same.

### BACKGROUND

In recent years, a steam turbine plant such as a thermal power plant has often included a carbon dioxide capturing system for capturing carbon dioxide in a flue gas. In general, the carbon dioxide capturing system includes a reboiler configured to heat an absorbing liquid which has absorbed the carbon dioxide with steam from the plant to cause the absorbing liquid to release the carbon dioxide. In order to stably operate the carbon dioxide capturing system, there is a need for stabilizing a pressure of this steam.

However, when the steam turbine plant is in a partial load operation, the pressure of the steam sent to the carbon dioxide capturing system is lowered in accordance with a decrease in a steam amount in the plant. For coping with this, it is thought that a separately-placed turbine and a separately-placed generator are disposed in the middle of an extraction steam line to the carbon dioxide capturing system to send the steam exhausted from the separately-placed turbine to the carbon dioxide capturing system, and to use this steam as a heat source of the reboiler. In this case, when the steam turbine plant is in the partial load operation, the pressure of the steam exhausted from the separately-placed turbine is adjusted by lowering a load of the separately-placed turbine to stabilize the pressure of the steam fed to the reboiler. In this case, a need for the separately-placed turbine and the separately-placed generator and a need for ensuring an inlet steam flow rate of the separately-placed turbine become problems.

EP2136037 A2, JP2011-132899 A and EP2497561 disclose a steam turbine plant which supplies steam to a reboiler in a carbon dioxide capturing system. EP2497561 represents a prior right application with a similar arrangement to the present invention. EP2497561 however is silent whether the two extraction line valves are controlled by the same controller, as in the present invention, or whether the intermediate pressure extraction valve is controlled by a separate controller, e.g. a reboiler controller.

### SUMMARY OF THE INVENTION

A steam turbine plant according to the present invention is defined by appended independent claim 1. A control method of controlling a steam turbine plant is defined by appended independent claim 7.

### BRIEF DESCRIPTION OF THE DRAWINGS

FIG. 1 is a schematic view showing a configuration of a steam turbine plant of a first configuration not forming part of the invention but being helpful to understand the invention;
FIG. 2 is a schematic view showing a configuration of a carbon dioxide capturing system of the first configuration;
FIG. 3 is a schematic view showing a configuration of a steam turbine plant of a modification of the first configuration not forming part of the invention but being helpful to understand the invention;
FIG. 4 is a schematic view showing a configuration of a steam turbine plant of a second configuration representing an embodiment of the invention; and
FIGS. 5 to 7 are schematic views showing configurations of steam turbine plants of modifications of the second configuration;

### DETAILED DESCRIPTION

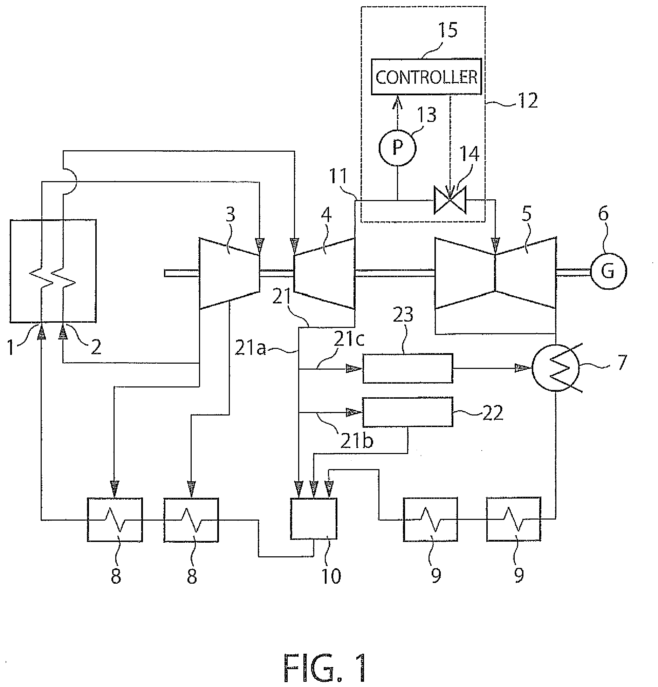

Configurations and embodiments will now be explained with reference to the accompanying drawings. FIGS. 1 to 7 show only major facilities and do not show ancillary facilities.

The invention is solely defined by appended claims.

In one configuration, a steam turbine plant includes a boiler configured to heat water to change the water into steam, a first turbine configured to be driven by the steam from the boiler, a reheater configured to heat the steam exhausted from the first turbine, a second turbine configured to driven by the steam from the reheater, and a third turbine configured to driven by the steam exhausted from the second turbine. The plant further includes a carbon dioxide capturing system including an absorbing tower configured to cause an absorbing liquid to absorb carbon dioxide, a regeneration tower configured to cause the absorbing liquid to release the carbon dioxide, and a reboiler configured to heat the absorbing liquid with heat of the steam exhausted or extracted from the second turbine. The plant further includes a steam pipe configured to feed the steam exhausted from the second turbine to the third turbine, and a first steam extraction pipe configured to send the steam exhausted or extracted from the second turbine to the reboiler. The plant further includes a pressure detector configured to detect a pressure of the steam flowing through the steam pipe or the first steam extraction pipe, a pressure adjustment valve provided on the steam pipe, and a controller configured to control the pressure adjustment valve based on the pressure detected by the pressure detector.

### (First configuration not forming part of the invention but being helpful to understand the invention)

FIG. 1 is a schematic view showing a configuration of a steam turbine plant.

The steam turbine plant of FIG. 1 includes a boiler 1, a reheater 2, a high-pressure turbine 3 as an example of a first turbine, an intermediate-pressure turbine 4 as an example of a second turbine, a low-pressure turbine 5 as an example of a third turbine, a power generator 6, a condenser 7, high-pressure feed water heaters 8, low-pressure feed water heaters 9, and a deaerator 10.

In the plant of FIG. 1, the boiler 1 heats water to change the water into steam, and the high-pressure turbine 3 is driven by the steam from the boiler 1. The steam exhausted from the high-pressure turbine 3 is heated by the reheater 2, and the intermediate-pressure turbine 4 is driven by the steam from the reheater 2. Furthermore, the low-pressure turbine 5 is driven by the steam exhausted from the intermediate-pressure turbine 4. The power generator 6 generates power by the rotation of a rotation shaft to which the high-pressure turbine 3, the intermediate-pressure turbine 4, and the low-pressure turbine 5 are attached.

The steam exhausted from the low-pressure turbine 5 is condensed by the condenser 7 so as to be condensed water. The condensed water exhausted from the condenser 7 is heated while passing through the low-pressure feed water heaters 9, the deaerator 10, and the high-pressure feed water heaters 8, and is then introduced to the boiler 1 again to be changed into the steam. In the high-pressure feed water heaters 8, heat of the steam exhausted and extracted from the high-pressure turbine 3 is used. In the deaerator 10, heat of the steam exhausted from the intermediate-pressure turbine 4 is used.

The steam turbine plant of FIG. 1 further includes a steam pipe 11, a control system 12, an intermediate-pressure steam extraction pipe 21 as an example of a first steam extraction pipe, a carbon dioxide capturing system 22, and a boiler feed water pump turbine 23.

The steam exhausted from the intermediate-pressure turbine 4 is fed to the low-pressure turbine 5 through the steam pipe 11, and is sent to the deaerator 10, the carbon dioxide capturing system 22, and the boiler feed water pump turbine 23 through the intermediate-pressure steam extraction pipe 21. The control system 12 is connected to the steam pipe 11, and includes a pressure detector 13, a pressure adjustment valve 14, and a controller 15. Details of the control system 12 will be described later.

On the other hand, the intermediate-pressure steam extraction pipe 21 includes a pipe 21a connecting the intermediate-pressure turbine 4 and the deaerator 10, a pipe 21b branched from the pipe 21a and connected to the carbon dioxide capturing system 22, and a pipe 21c branched from the pipe 21a and connected to the boiler feed water pump turbine 23. The steam fed to the carbon dioxide capturing system 22 is sent to the deaerator 10 after heat of the steam is used. The steam fed to the boiler feed water pump turbine 23 is used for driving the turbine 23, and is then collected in the condenser 7.

### (1) Details of Carbon Dioxide Capturing System 22

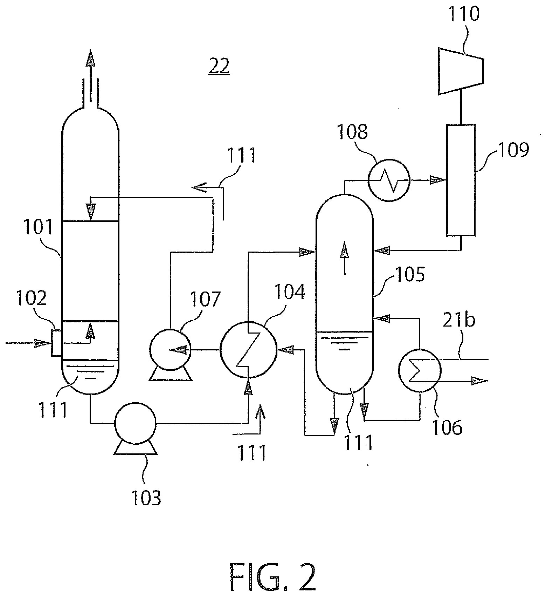

Referring to FIG. 2, details of the carbon dioxide capturing system 22 will be described.

FIG. 2 is a schematic view showing a configuration of the carbon dioxide capturing system 22 of the first configuration.

As shown in FIG. 2, the carbon dioxide capturing system 22 includes an absorbing tower 101, a flue gas introduction port 102, a rich liquid circulation pump 103, a heat exchanger 104, a regeneration tower 105, a reboiler 106, a lean liquid circulation pump 107, a regeneration tower condenser 108, a gas-liquid separator 109, and a carbon dioxide capturing apparatus 110. The reference sign 111 denotes an absorbing liquid circulated in the system 22.

The absorbing tower 101 includes the flue gas introduction port 102 for introducing a flue gas exhausted from the boiler 1 and the reheater 2. The absorbing tower 101 brings this flue gas and the absorbing liquid 111 into gas-liquid contact with each other, so that carbon dioxide in the flue gas is absorbed into the absorbing liquid 111. The absorbing liquid (rich liquid) 111 which has absorbed the carbon dioxide is exhausted from a lower part of the absorbing tower 101 and sent to the regeneration tower 105 by the rich liquid circulation pump 103 via the heat exchanger 104. On the other hand, the flue gas from which the carbon dioxide is removed is emitted to the atmosphere from an upper part of the absorbing tower 101.

The absorbing liquid 111 introduced into the regeneration tower 105 is circulated between the regeneration tower 105 and the reboiler 106. At this time, the reboiler 106 heats the absorbing liquid 111 with the heat of the steam from the pipe 21b. As a result, a water vapor and a carbon dioxide gas are generated from the absorbing liquid 111, and these gases are returned into the regeneration tower 105 together with the absorbing liquid 111. By heating the absorbing liquid 111 flowing down in the regeneration tower 105 with heat of these gases, the regeneration tower 105 causes the absorbing liquid 111 to release the carbon dioxide gas to regenerate the absorbing liquid 111.

The absorbing liquid (lean liquid) 111 regenerated in the regeneration tower 105 is exhausted from a lower part of the regeneration tower 105 and returned to the absorbing tower 101 again by the lean liquid circulation pump 107 via the heat exchanger 104. At this time, in the heat exchanger 104, the low-temperature rich liquid is heated by heat of the high-temperature lean liquid. The steam fed from the pipe 21b and used in the reboiler 106 is fed to the deaerator 10 so as to serve as part of feed water heading to the boiler 1.

On the other hand, the carbon dioxide gas generated in the regeneration tower 105 is exhausted from an upper part of the regeneration tower 105 together with the water vapor generated in the regeneration tower 105. Regarding these gases, after the water vapor is condensed into water by the regeneration tower condenser 108 and the carbon dioxide gas is separated from the condensed water by the gas-liquid separator 109, the carbon dioxide gas is captured by the carbon dioxide capturing apparatus 110. The carbon dioxide capturing apparatus 110 includes, for example, a compressing and capturing machine which compresses and captures the carbon dioxide gas. On the other hand, the condensed water separated in the gas-liquid separator 109 is returned to the regeneration tower 105.

The absorbing liquid 111 may be any liquid as long as the liquid is capable of absorbing carbon dioxide and releasing the absorbed carbon dioxide under a predetermined condition. An example of the absorbing liquid 111 includes an amine aqueous solution. A specific example of the amine aqueous solution includes an aqueous solution containing one or more types of alkanolamines such as monoethanolamine, diethanolamine, triethanolamine, methyldiethanolamine, diisopropanolamine, and diglycolamine.

### (2) Details of Control System 12

Referring to FIG. 1 again, details of the control system 12 will be described.

As shown in FIG. 1, the control system 12 is connected to the steam pipe 11 which feeds the steam exhausted from the intermediate-pressure turbine 4 to the low-pressure turbine 5, and includes the pressure detector 13, the pressure adjustment valve 14, and the controller 15.

The pressure detector 13 is connected to the steam pipe 11 and detects the pressure of the steam flowing through the steam pipe 11. The detected value of the pressure by the pressure detector 13 is supplied to the controller 15. The pressure adjustment valve 14 is a valve provided on the steam pipe 11 for adjusting the pressure of the steam flowing through the steam pipe 11. The controller 15 controls the pressure adjustment valve 14 based on the detected value of the pressure supplied from the pressure detector 13 so as to adjust the pressure of the steam flowing through the steam pipe 11.

When the steam turbine plant of FIG. 1 is in a partial load operation, an outlet steam pressure of the intermediate-pressure turbine 4 (i.e., a pressure of the steam flowing through the steam pipe 11 and the intermediate-pressure steam extraction pipe 21) is changed by a load change of the plant. However, in order to stably operate the carbon dioxide capturing system 22, there is a need for stabilizing the pressure of the steam fed to the reboiler 106 of the carbon dioxide capturing system 22. Therefore, there is a need for stabilizing the outlet steam pressure of the intermediate-pressure turbine 4.

In the present configuration, the outlet steam pressure of the intermediate-pressure turbine 4 is detected by the pressure detector 13. Furthermore, the pressure adjustment valve 14 is controlled based on this pressure. Thereby, the outlet steam pressure of the intermediate-pressure turbine 4 can be stabilized even in the partial load operation. Therefore, according to the present configuration, an operation of the carbon dioxide capturing system 22 can be stably continued.

The controller 15 of the present configuration controls the pressure adjustment valve 14 so that the outlet steam pressure of the intermediate-pressure turbine 4 becomes a pressure which is suitable for the operation of the carbon dioxide capturing system 22. For example, the controller 15 controls the pressure adjustment valve 14 so that the detected value of the pressure by the pressure detector 13 is maintained to be a constant value or within a constant range. According to the present configuration, by setting this constant value or the constant range to be the pressure which is suitable for the operation of the carbon dioxide capturing system 22, a favorable operation of the carbon dioxide capturing system 22 can be continued. An example of the constant value is 490 kPa for example, and an example of the constant range is 480 to 500 kPa for example.

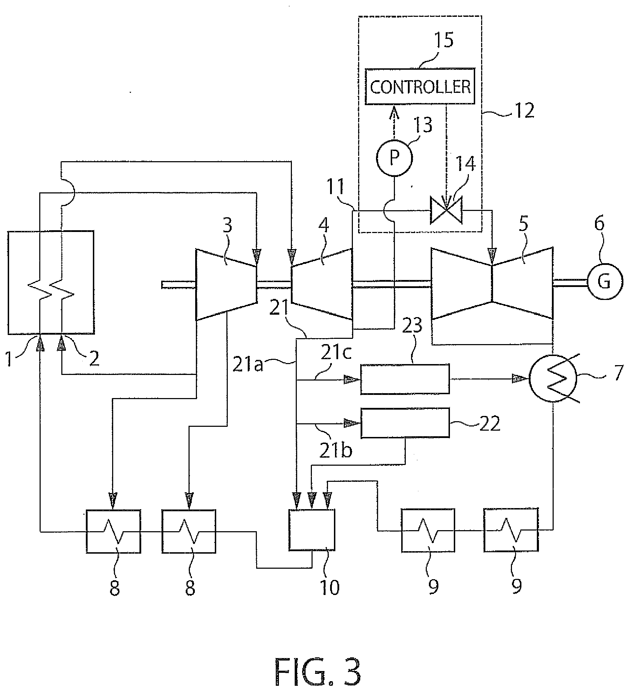

Instead of detecting the pressure of the steam flowing through the steam pipe 11, the pressure detector 13 may detect the pressure of the steam flowing through the intermediate-pressure steam extraction pipe 21 (refer to FIG. 3). FIG. 3 is a schematic view showing a configuration of a steam turbine plant of a modification of the first configuration. According to this modification, the pressure adjustment valve 14 can be controlled based on the outlet steam pressure of the intermediate-pressure turbine 4 as similarly to the case of FIG. 1.

### (3) Effects of First configuration

Effects of the first configuration will be described. As described above, the present embodiment detects the pressure of the steam flowing through the steam pipe 11 or the intermediate-pressure steam extraction pipe 21, and controls the pressure adjustment valve 14 based on this pressure. Therefore, according to the present embodiment, the pressure of the steam fed to the reboiler 106 of the carbon dioxide capturing system 22 can be stabilized even in the partial load operation. Furthermore, according to the present embodiment, such stabilization of the pressure can be realized not with a large configuration such as a separately-placed turbine and a separately-placed generator but with a simple configuration such as the pressure detector 13, the pressure adjustment valve 14, and the controller 15.

### (Second configuration corresponding to an embodiment of the invention)

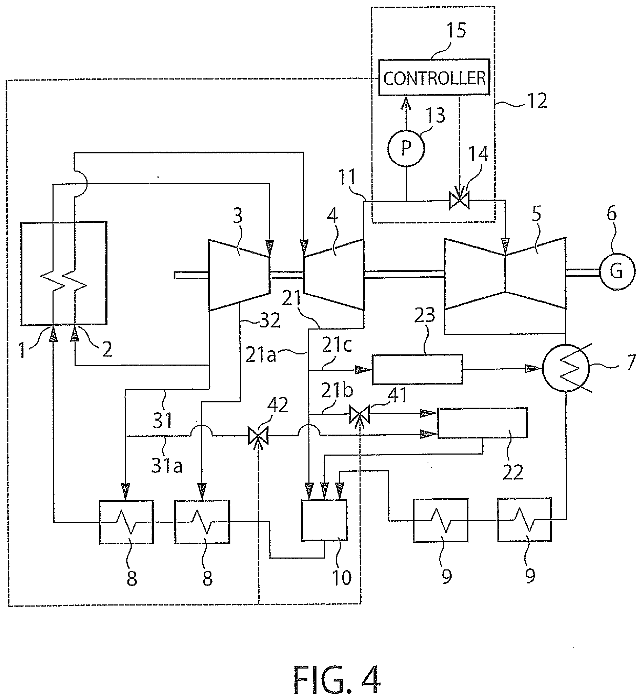

FIG. 4 is a schematic view showing a configuration of a steam turbine plant of a second configuration being an embodiment of the invention.

The reference signs 31, 32 denote high-pressure steam extraction pipes for sending the steam from the high-pressure turbine 3 to the high-pressure feed water heaters 8 and the reheater 2. The former high-pressure steam extraction pipe 31 sends the steam exhausted from an outlet of the high-pressure turbine 3 to the high-pressure feed water heater 8 and the reheater 2. On the other hand, the latter high-pressure steam extraction pipe 32 sends the steam extracted from an extraction port in a middle stage of the high-pressure turbine 3 to the high-pressure feed water heater 8.

As shown in FIG. 4, the high-pressure steam extraction pipe 31 includes a pipe 31a branched in the middle from the high-pressure turbine 3 toward the high-pressure feed water heater 8. The pipe 31a is connected to the carbon dioxide capturing system 22 as well as the pipe 21b. Therefore, the steam exhausted from the high-pressure turbine 3 is sent not only to the high-pressure feed water heaters 8 and the reheater 2 but also to the carbon dioxide capturing system 22. The high-pressure steam extraction pipe 31 of FIG. 4 is an example of a second steam extraction pipe. The pipe 31a is connected to the reboiler 106 of the carbon dioxide capturing system 22 as well as the pipe 21b.

The steam turbine plant of FIG. 4 includes a first switching valve 41 provided on the pipe 21b, and a second switching valve 42 provided on the pipe 31a in addition to the components shown in FIG. 1. Opening and closing of the switching valves 41, 42 and an opening degree of the switching valves 41, 42 are controlled by the controller 15. The first and second switching valves 41, 42 are examples of first and second valves, respectively.

### (1) Usage of First and Second Switching Valves 41, 42

Continuously referring to FIG. 4, a usage of the first and second switching valves 41, 42 will be described.

In the steam turbine plant of FIG. 4, outlet steam of the low-pressure turbine 5 is desirably wet steam of several percent.

When the steam is fed from an outlet of the intermediate-pressure turbine 4 to the carbon dioxide capturing system 22 and a load of the power generator 6 is reduced while maintaining the outlet steam pressure of the intermediate-pressure turbine 4 constant, the outlet steam of the low-pressure turbine 5 becomes dry steam. When the load of the power generator 6 is further reduced, the output steam of the low-pressure turbine 5 becomes superheated steam. Therefore, a minimum load for feeding the steam from the outlet of the intermediate-pressure turbine 4 to the carbon dioxide capturing system 22 is set to be such a load that the exhausted steam of the low-pressure turbine 5 is not in an excessively dry range. This minimum load is called as a limit value of a generator load.

The controller 15 controls the pressure adjustment valve 14 so that the outlet steam pressure of the intermediate-pressure turbine 4 is maintained constant or within a constant range. When the generator load is reduced and reaches the limit value, the controller 15 controls the first and second switching valves 41, 42 so as to close the steam sending from the intermediate-pressure turbine 4 via the first switching valve 41, open the steam sending from the high-pressure turbine 3 via the second switching valve 42, and fully open the pressure adjustment valve 14.

The steam sending from the high-pressure turbine 3 via the second switching valve 42 is controlled by a pressure adjustment valve (not shown) and fed to the carbon dioxide capturing system 22,

A condition to determine which of the switching valves 41, 42 is brought into an opened state in accordance with an extent of the generator load may be set in any ways. For example, in order to surely avoid a situation that the outlet steam of the low-pressure turbine 5 becomes dry steam, a switching valve which is selected from the switching valves 41, 42 to be brought into an opened state may be switched while the generator load is sufficiently high.

The limit value of the generator load can be calculated, for example, by measuring a temperature or a pressure of the outlet steam of the low-pressure turbine 5 as well as it is set to be a preliminarily fixed value. The limit value can also be calculated, for example, by measuring a pressure or a temperature of the outlet steam of the high-pressure turbine 3 or the intermediate-pressure turbine 4 and the pressure of the outlet steam of the low-pressure turbine 5 and converting this measurement result into the temperature of the outlet steam of the low-pressure turbine 5. In a case where these methods are adopted, a temperature measurement instrument or a pressure measurement instrument which measures the temperatures or the pressures is installed and the limit value is calculated for example by the controller 15.

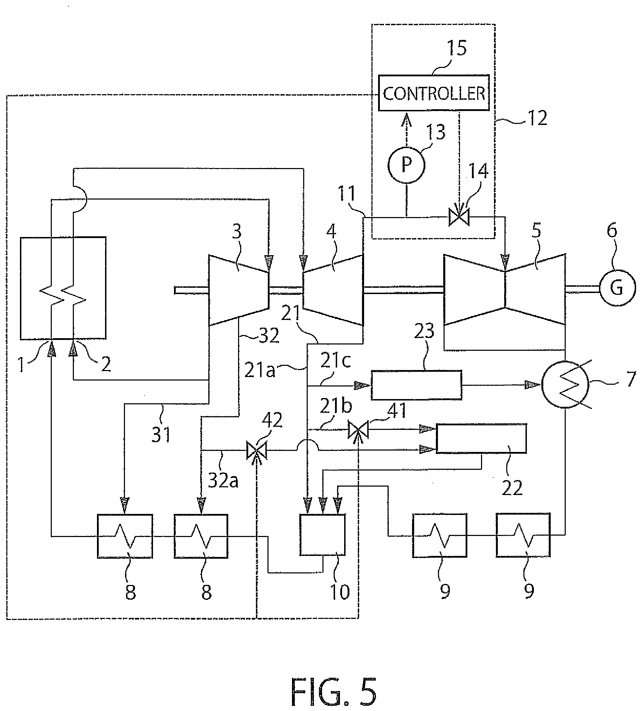

In the present embodiment, instead of the configuration shown in FIG. 4, configurations shown in FIGS. 5 to 7 may be adopted. FIGS. 5 to 7 are schematic views showing configurations of steam turbine plants of modifications of the second configuration being an embodiment of the invention.

In FIG. 5, the high-pressure steam extraction pipe 32 includes a pipe 32a branched in the middle from the high-pressure turbine 3 toward the high-pressure feed water heater 8, and this pipe 32a is connected to the carbon dioxide capturing system 22. Therefore, in FIG. 5, the steam extracted from the high-pressure turbine 3 is sent to the carbon dioxide capturing system 22. The high-pressure steam extraction pipe 32 of FIG. 5 is an example of the second steam extraction pipe, as well as the high-pressure steam extraction pipe 31 of FIG. 4.

As in FIG. 5, feeding the extracted steam from the high-pressure turbine 3 to the carbon dioxide capturing system 22 has an advantage that higher-pressure steam can be fed in comparison to a case where the exhausted steam is fed. On the other hand, as in FIG. 4, feeding the exhausted steam from the high-pressure turbine 3 to the carbon dioxide capturing system 22 has an advantage that turbine efficiency of the high-pressure turbine 3 becomes higher in comparison to a case where the extracted steam is fed.

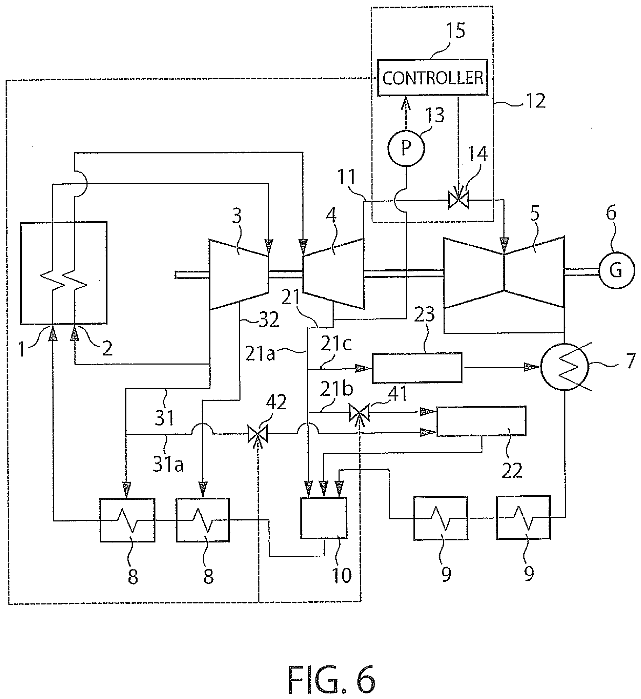

In FIG. 6, the intermediate-pressure steam extraction pipe 21 sends not the steam exhausted from the outlet of the intermediate-pressure turbine 4 but the steam extracted from an extraction port in the middle step of the intermediate-pressure turbine 4. In this case, the pressure of the steam flowing through the intermediate-pressure steam extraction pipe 21 becomes a higher pressure than the pressure of the steam flowing through the steam pipe 11. Therefore, the pressure detector 13 detects the pressure of the steam flowing through the intermediate-pressure steam extraction pipe 21 more desirably than the pressure of the steam flowing through the steam pipe 11.

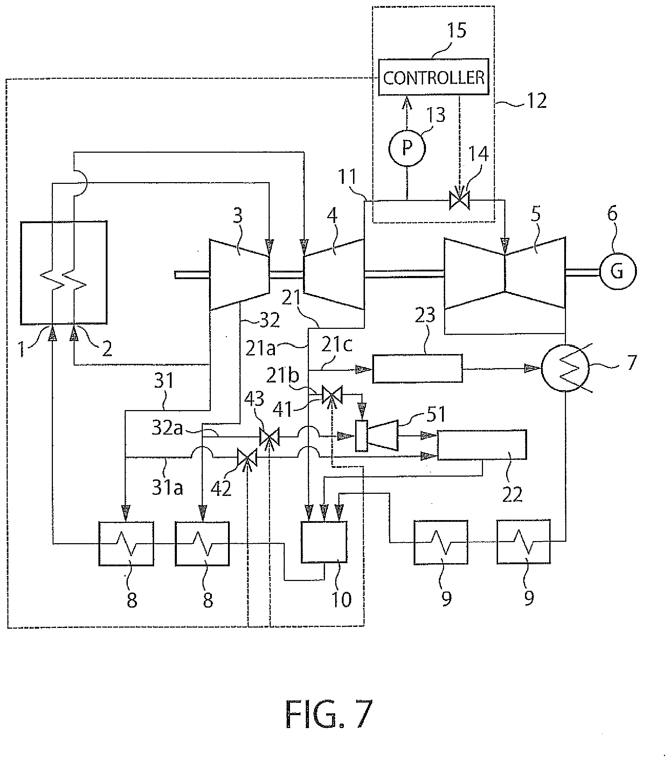

In FIG. 7, the high-pressure steam extraction pipe 31 includes the pipe 31a branched in the middle from the high-pressure turbine 3 toward the high-pressure feed water heater 8, and the high-pressure steam extraction pipe 32 includes a pipe 32a branched in the middle from the high-pressure turbine 3 toward the high-pressure feed water heater 8.

The pipe 31a is connected to the carbon dioxide capturing system 22. Therefore, in FIG. 7, the steam exhausted from the high-pressure turbine 3 is sent to the carbon dioxide capturing system 22. The second switching valve 42 in which the opening and closing and the opening degree are controlled by the controller 15 is provided on the pipe 31a. The high-pressure steam extraction pipe 31 of FIG. 7 is an example of the second steam extraction pipe, as well as the high-pressure steam extraction pipe 31 of FIG. 4.

On the other hand, the pipe 21b and the pipe 32a are connected to the carbon dioxide capturing system 22 via a steam ejector 51. The steam ejector 51 can mix the steam extracted from the high-pressure turbine 3 and the steam exhausted from the intermediate-pressure turbine 4 to send the mixed steam to the carbon dioxide capturing system 22. Thereby, even when the pressure of the exhausted steam of the intermediate-pressure turbine 4 becomes a lower value than the pressure required by the carbon dioxide capturing system 22 due to load reduction, the steam ejector 51 can boost the pressure by mixing it with the extracted steam from the high-pressure turbine 3. First and third switching valves 41, 43 in which opening and closing and an opening degree are controlled by the controller 15 are provided on the pipes 21b, 32a, respectively. The high-pressure steam extraction pipe 32 of FIG. 7 is an example of a third steam extraction pipe.

The intermediate-pressure steam extraction pipe 21 of FIG. 7 may send not the steam exhausted from the outlet of the intermediate-pressure turbine 4 but the steam extracted from the extraction port in the middle step of the intermediate-pressure turbine 4, as well as the intermediate-pressure steam extraction pipe 21 of FIG. 6.

### (2) Effects of Second configuration being an embodiment of the invention

Effects of the second configuration will be described. As described above, in the present embodiment, the configuration that the steam is fed from the intermediate-pressure steam extraction pipe 21 and the high-pressure steam extraction pipes 31, 32 to the carbon dioxide capturing system 22 is adopted, and the first and second switching valves 41, 42 are provided on the intermediate-pressure steam extraction pipe 21 and the high-pressure steam extraction pipes 31, 32, respectively.

Therefore, according to the present embodiment, even in a case where a partial load is further lower than a case of the first configuration, the pressure of the steam fed to the reboiler 106 of the carbon dioxide capturing system 22 can be stabilized. Further, according to the present embodiment, such stabilization of the pressure can be realized with a simple configuration such as the first and second switching valves 41, 42.

While certain embodiments have been described, these embodiments have been presented by way of example only, and are not intended to limit the scope of the inventions. Indeed, the novel plants, methods and systems described herein may be embodied in a variety of other forms; furthermore, various omissions, substitutions and changes in the form of the plants, methods and systems described herein may be made without departing from the scope of appended claims.

## Claims

1. A steam turbine plant comprising:
a boiler (1) configured to heat water to change the water into steam;
a first turbine (3) configured to be driven by the steam from the boiler;
a reheater (2) configured to heat the steam exhausted from the first turbine;
a second turbine (4) configured to be driven by the steam from the reheater;
a third turbine (5) configured to be driven by the steam exhausted from the second turbine;
a carbon dioxide capturing system (22) including an absorbing tower (101) configured to cause an absorbing liquid to absorb carbon dioxide, a regeneration tower (105) configured to cause the absorbing liquid to release the carbon dioxide, and a reboiler (106) configured to heat the absorbing liquid with heat of the steam exhausted or extracted from the second turbine;
a steam pipe (11) configured to feed the steam exhausted from the second turbine to the third turbine;
a first steam extraction pipe (21) configured to send the steam exhausted or extracted from the second turbine to the reboiler; and
a second steam extraction pipe (31) configured to send the steam exhausted or extracted from the first turbine to the reboiler,
the plant further comprising:
a pressure detector (13) configured to detect a pressure of the steam flowing through the steam pipe or the first steam extraction pipe;
a pressure adjustment valve (14) provided on the steam pipe;
a controller (15) configured to control the pressure adjustment valve based on the pressure detected by the pressure detector;
a first valve (41) provided on the first steam extraction pipe and configured to be controlled by the controller; and
a second valve (42) provided on the second steam extraction pipe and configured to be controlled by the controller.

2. The plant of Claim 1, wherein the controller controls the pressure adjustment valve so that a value of the pressure is maintained to be a constant value or within a constant range.

3. The plant of Claim 1, wherein the controller controls the first and second valves based on a generator load and a limit value of the generator load.

4. The plant of Claim 1, wherein the controller controls the first and second valves to bring one of the first and second valves into an opened state and the other valve into a closed state.

5. The plant of Claim 1, further comprising:
a third steam extraction pipe (32) configured to send the steam extracted from the first turbine to the reboiler; and
a steam ejector (51) arranged between the first and third steam extraction pipes and the reboiler, and configured to mix the steam from the first steam extraction pipe and the steam from the third steam extraction pipe to send the mixed steam to the reboiler.

6. A control system configured to control a steam turbine plant according to any preceding claim.

7. A control method of controlling a steam turbine plant, the plant comprising:
a boiler (1) configured to heat water to change the water into steam;
a first turbine (3) configured to be driven by the steam from the boiler;
a reheater (2) configured to heat the steam exhausted from the first turbine;
a second turbine (4) configured to be driven by the steam from the reheater;
a third turbine (5) configured to be driven by the steam exhausted from the second turbine;
a carbon dioxide capturing system (22) including an absorbing tower (101) configured to cause an absorbing liquid to absorb carbon dioxide, a regeneration tower (105) configured to cause the absorbing liquid to release the carbon dioxide, and a reboiler (106) configured to heat the absorbing liquid with heat of the steam exhausted or extracted from the second turbine;
a steam pipe (11) configured to feed the steam exhausted from the second turbine to the third turbine; and
a first steam extraction pipe (21) configured to send the steam exhausted or extracted from the second turbine to the reboiler; and
a second steam extraction pipe (31) configured to send the steam exhausted or extracted from the first turbine to the reboiler,
the control method comprising:
detecting a pressure of the steam flowing through the steam pipe or the first steam extraction pipe with a pressure detector (13);
supplying a detected value of the pressure by the pressure detector to a controller;
controlling a pressure adjustment valve (14) provided on the steam pipe based on the detected value of the pressure with the controller;
controlling a first valve (41) provided on the first steam extraction pipe with the controller; and
controlling a second valve (42) provided on the second steam extraction pipe with the controller.

## Patentansprüche

1. Dampfturbinenanlage, Folgendes beinhaltend:
einen Heizkessel (1), welcher konfiguriert ist, um Wasser zu erhitzen, um das Wasser in Dampf zu verwandeln;
eine erste Turbine (3), welche konfiguriert ist, um von dem Dampf des Heizkessels angetrieben zu werden;
einen Nacherhitzer (2), welcher konfiguriert ist, um den aus der ersten Turbine ausgestoßenen Dampf zu erhitzen;
eine zweite Turbine (4), welche konfiguriert ist, um von dem Dampf des Nacherhitzers angetrieben zu werden;
eine dritte Turbine (5), welche konfiguriert ist, um von dem Dampf angetrieben zu werden, welcher aus der zweiten Turbine ausgestoßen wird;
ein Kohlendioxid-Fangsystem (22), welches einen Absorptionsturm (101) umfasst, welcher konfiguriert ist, um eine Absorptionsflüssigkeit zum Absorbieren von Kohlendioxid zu veranlassen, einen Regenerierungsturm (105), welcher konfiguriert ist, um die Absorptionsflüssigkeit zum Freisetzen des Kohlendioxids zu veranlassen, und einen Nachheizkessel (106), welcher konfiguriert ist, um die Absorptionsflüssigkeit mit Hitze von dem aus der zweiten Turbine ausgestoßenen oder extrahierten Dampf zu erhitzen;
ein Dampfrohr (11), welches konfiguriert ist, um den aus der zweiten Turbine ausgestoßenen Dampf der dritten Turbine zuzuführen;
ein erstes Dampfextraktionsrohr (21), welches konfiguriert ist, um den aus der zweiten Turbine ausgestoßenen oder extrahierten Dampf an den Nacherhitzer zu leiten; und
ein zweites Dampfextraktionsrohr (31), welches konfiguriert ist, um den aus der ersten Turbine ausgestoßenen oder extrahierten Dampf an den Nacherhitzer zu leiten,
wobei die Anlage zudem Folgendes beinhaltet:
einen Drucksensor (13), welcher konfiguriert ist, um einen Druck des durch das Dampfrohr oder das erste Dampfextraktionsrohr strömenden Dampfs zu erfassen;
ein Druckeinstellventil (14), welches an dem Dampfrohr bereitgestellt ist;
ein Steuergerät (15), welches konfiguriert ist, um das Druckeinstellventil basierend auf dem durch den Drucksensor erfassten Druck zu steuern;
ein erstes Ventil (41), welches an dem ersten Dampfextraktionsrohr bereitgestellt und konfiguriert ist, um durch das Steuergerät gesteuert zu werden; und
ein zweites Ventil (42), welches an dem zweiten Dampfextraktionsrohr bereitgestellt und konfiguriert ist, um durch das Steuergerät gesteuert zu werden.

2. Anlage nach Anspruch 1, bei welcher das Steuergerät das Druckeinstellventil so steuert, dass ein Druckwert so gehalten wird, dass er ein konstanter Wert ist oder innerhalb eines konstanten Bereichs liegt.

3. Anlage nach Anspruch 1, bei welcher das Steuergerät das erste und das zweite Ventil basierend auf einer Generatorlast und einem Grenzwert der Generatorlast steuert.

4. Anlage nach Anspruch 1, bei welcher das Steuergerät das erste und das zweite Ventil steuert, um eines des ersten und zweiten Ventils in einen geöffneten Zustand und das andere Ventil in einen geschlossenen Zustand zu bringen.

5. Anlage nach Anspruch 1, zudem Folgendes beinhaltend:
ein drittes Dampfextraktionsrohr (32), welches konfiguriert ist, um den aus der ersten Turbine extrahierten Dampf an den Nacherhitzer zu leiten; und
einen Dampfauswerfer (51), welcher zwischen dem ersten und dem dritten Dampfextraktionsrohr und dem Nacherhitzer angeordnet und konfiguriert ist, um den Dampf vom ersten Dampfextraktionsrohr und den Dampf vom dritten Dampfextraktionsrohr zu mischen, um den gemischten Dampf an den Nacherhitzer zu leiten.

6. Steuersystem, welches konfiguriert ist, um eine Dampfturbinenanlage nach einem der vorhergehenden Ansprüche zu steuern.

7. Steuerverfahren zum Steuern einer Dampfturbinenanlage, wobei die Anlage Folgendes beinhaltet:
einen Heizkessel (1), welcher konfiguriert ist, um Wasser zu erhitzen, um das Wasser in Dampf zu verwandeln;
eine erste Turbine (3), welche konfiguriert ist, um von dem Dampf des Heizkessels angetrieben zu werden;
einen Nacherhitzer (2), welcher konfiguriert ist, um den aus der ersten Turbine ausgestoßenen Dampf zu erhitzen;
eine zweite Turbine (4), welche konfiguriert ist, um von dem Dampf des Nacherhitzers angetrieben zu werden;
eine dritte Turbine (5), welche konfiguriert ist, um von dem Dampf angetrieben zu werden, welcher aus der zweiten Turbine ausgestoßen wird;
ein Kohlendioxid-Fangsystem (22), welches einen Absorptionsturm (101) umfasst, welcher konfiguriert ist, um eine Absorptionsflüssigkeit zum Absorbieren von Kohlendioxid zu veranlassen, einen Regenerierungsturm (105), welcher konfiguriert ist, um die Absorptionsflüssigkeit zum Freisetzen des Kohlendioxids zu veranlassen, und einen Nachheizkessel (106), welcher konfiguriert ist, um die Absorptionsflüssigkeit mit Hitze von dem aus der zweiten Turbine ausgestoßenen oder extrahierten Dampf zu erhitzen;
ein Dampfrohr (11), welches konfiguriert ist, um den aus der zweiten Turbine ausgestoßenen Dampf der dritten Turbine zuzuführen; und
ein erstes Dampfextraktionsrohr (21), welches konfiguriert ist, um den aus der zweiten Turbine ausgestoßenen oder extrahierten Dampf an den Nacherhitzer zu leiten; und
ein zweites Dampfextraktionsrohr (31), welches konfiguriert ist, um den aus der ersten Turbine ausgestoßenen oder extrahierten Dampf an den Nacherhitzer zu leiten,
wobei das Steuerungsverfahren folgende Schritte beinhaltet:
Erfassen eines Drucks des durch das Dampfrohr oder das erste Dampfextraktionsrohr strömenden Dampfs mit einem Drucksensor (13);
Liefern eines durch den Drucksensor erfassten Wertes des Drucks an ein Steuergerät;
Steuern eines Druckeinstellventils (14), welches an dem Dampfrohr bereitgestellt ist, basierend auf dem erfassten Wert des Drucks, mit dem Steuergerät;
Steuern eines ersten Ventils (41), welches an dem ersten Dampfextraktionsrohr bereitgestellt ist, mit dem Steuergerät; und
Steuern eines zweiten Ventils (42), welches an dem zweiten Dampfextraktionsrohr bereitgestellt ist, mit dem Steuergerät.

## Revendications

1. Installation de turbine à vapeur comprenant :
une chaudière (1) configurée afin de chauffer de l'eau permettant de changer l'eau en vapeur ;
une première turbine (3) configurée afin d'être entraînée par la vapeur provenant de la chaudière ;
un réchauffeur (2) configuré afin de chauffer la vapeur s'échappant de la première turbine ;
une deuxième turbine (4) configurée afin d'être entraînée par la vapeur provenant du réchauffeur ;
une troisième turbine (5) configurée afin d'être entraînée par la vapeur s'échappant de la deuxième turbine ;
un système de capture du dioxyde de carbone (22) incluant une tour d'absorption (101) configurée afin de provoquer l'absorption de dioxyde de carbone par un liquide absorbant, une tour de régénération (105) configurée afin de provoquer la libération de dioxyde de carbone par le liquide absorbant, et un bouilleur (106) configuré afin de chauffer le liquide absorbant avec la chaleur de la vapeur émise ou extraite de la deuxième turbine ;
un tuyau de vapeur (11) configuré afin d'alimenter la vapeur émise de la deuxième turbine à la troisième turbine ;
un premier tuyau d'extraction de vapeur (21) configuré afin d'envoyer la vapeur émise ou extraite de la deuxième turbine au bouilleur ; et
un deuxième tuyau d'extraction de vapeur (31) configuré afin d'envoyer la vapeur émise ou extraite de la première turbine au bouilleur,
l'installation comprenant en outre :
un détecteur de pression (13) configuré afin de détecter une pression de la vapeur s'écoulant à travers le tuyau de vapeur ou le premier tuyau d'extraction de vapeur ;
une vanne d'ajustement de pression (14) ménagée sur le tuyau de vapeur ;
un dispositif de commande (15) configuré afin de commander la vanne de réglage de pression sur la base de la pression détectée par le détecteur de pression ;
une première vanne (41) ménagée sur le premier tuyau d'extraction de vapeur et configurée afin d'être commandée par le dispositif de commande ; et
une seconde vanne (42) ménagée sur le deuxième tuyau d'extraction de vapeur et configurée afin d'être commandée par le dispositif de commande.

2. Installation selon la revendication 1, dans laquelle le dispositif de commande commande la vanne d'ajustement de pression de sorte qu'une valeur de la pression soit maintenue afin d'être une valeur constante ou dans une plage constante.

3. Installation selon la revendication 1, dans laquelle le dispositif de commande commande la première et la seconde vannes sur la base d'une charge du générateur et d'une valeur limite de la charge de générateur.

4. Installation selon la revendication 1, dans laquelle le dispositif de commande commande les première et seconde vannes permettant d'amener une des première et seconde vannes dans un état ouvert et l'autre vanne dans un état fermé.

5. Installation selon la revendication 1, comprenant en outre :
un troisième tuyau d'extraction de vapeur (32) configuré afin d'envoyer la vapeur extraite de la première turbine au bouilleur ; et
un éjecteur de vapeur (51) agencé entre le premier et le troisième tuyaux d'extraction de vapeur et le bouilleur, et configuré afin de mélanger la vapeur du premier tuyau d'extraction de vapeur et la vapeur provenant du troisième tuyau d'extraction de vapeur afin d'envoyer la vapeur mélangée au bouilleur.

6. Système de commande configuré afin de commander une installation de turbine à vapeur selon l'une quelconque des revendications précédentes.

7. Procédé de commande consistant à commander une installation de turbine à vapeur, l'installation comprenant :
une chaudière (1) configurée afin de chauffer de l'eau afin de changer l'eau en vapeur ;
une première turbine (3) configurée afin d'être entraînée par la vapeur provenant de la chaudière ;
un réchauffeur (2) configuré afin de chauffer la vapeur s'échappant de la première turbine ;
une deuxième turbine (4) configurée afin d'être entraînée par la vapeur provenant du réchauffeur ;
une troisième turbine (5) configurée afin d'être entraînée par la vapeur s'échappant de la deuxième turbine ;
un système de capture du dioxyde de carbone (22) incluant une tour d'absorption (101) configurée afin de provoquer l'absorption de dioxyde de carbone par un liquide absorbant, une tour de régénération (105) configurée afin de provoquer la libération de dioxyde de carbone par le liquide absorbant, et un bouilleur (106) configuré afin de chauffer le liquide absorbant avec la chaleur de la vapeur émise ou extraite de la deuxième turbine ;
un tuyau de vapeur (11) configuré afin d'alimenter la vapeur émise de la deuxième turbine à la troisième turbine ;
un premier tuyau d'extraction de vapeur (21) configuré afin d'envoyer la vapeur émise ou extraite de la deuxième turbine au bouilleur ; et
un deuxième tuyau d'extraction de vapeur (31) configuré afin d'envoyer la vapeur émise ou extraite de la première turbine au bouilleur,
le procédé de commande comprenant :
la détection d'une pression de la vapeur s'écoulant à travers le conduit de vapeur ou le premier tuyau d'extraction de vapeur avec un détecteur de pression (13) ;
la fourniture d'une valeur détectée de la pression par le détecteur de pression à un dispositif de commande ;
la commande d'une vanne d'ajustement de pression (14) ménagée sur le tuyau de vapeur sur la base de la valeur détectée de la pression avec le système de commande ;
la commande d'une première vanne (41) ménagée sur le premier tuyau d'extraction de vapeur avec le dispositif de commande ; et
la commande d'une seconde vanne (42) ménagée sur le deuxième tuyau d'extraction de vapeur avec le dispositif de commande.
